# DEMANDE DE BREVET EUROPEEN

(11) **EP 3 623 248 A1**
(43) Date de publication de la demande: **18.03.2020**
(21) Numéro de dépôt: 19196959.1
(22) Date de dépôt: 12.09.2019
(51) Int. Cl.: B61F 5/10, B60G 17/052

(54) **SUSPENSION PNEUMATIQUE POUR VÉHICULE FERROVIAIRE**

(30) Priorité: 14.09.2018 FR 1858328
(71) Demandeur: SpeedInnov, 75008 Paris (FR)
(72) Inventeur: SARTI, Christophe, 17220 SAINT MEDARD D'AUNIS (FR); MARTIN, Michel, 71200 LE CREUSOT (FR); DESSERTENNE, Philippe, 71200 LE CREUSOT (FR); MENDES FREDERICO, Luis, 17180 PERIGNY (FR); GOUDE, Romain, 72000 LE MANS (FR); THOMERET, Thierry, 94200 IVRY SUR SEINE (FR)
(74) Mandataire: Lavoix

(57) **Abrégé**

La présente invention concerne une suspension pneumatique (10) pour véhicule ferroviaire comprenant une caisse et un bogie, ladite suspension pneumatique s'étendant entre la caisse et un châssis du bogie, comprenant :
- au moins un élément de suspension (12) pneumatique secondaire destiné à supporter verticalement la caisse sur le châssis et propre à être alimenté en air comprimé à une pression d'alimentation, et
- une source de pression (16),
caractérisé en ce qu'elle comprend en outre :
- une unité de commande (24),
- pour chaque élément de suspension (12), un capteur (26) connecté à l'unité de commande (24) et apte à mesurer une hauteur entre le châssis et la caisse au niveau dudit élément de suspension (12), et
- pour chaque élément de suspension (12), une électrovanne (18) reliant ledit élément de suspension (12) à la source de pression (16), ladite électrovanne (18) étant commandée automatiquement par un signal de commande électrique, généré par l'unité de commande (24) en fonction de la ou des hauteurs mesurées.

## Description

La présente invention concerne une suspension pneumatique pour véhicule ferroviaire comprenant une caisse et un bogie, ladite suspension pneumatique s'étendant entre la caisse et un châssis du bogie, comprenant au moins un élément de suspension pneumatique secondaire destiné à supporter verticalement la caisse sur le châssis et propre à être alimenté en air comprimé à une pression d'alimentation, et une source de pression.

L'invention s'applique au domaine des transports, en particulier du transport ferroviaire.

Les suspensions pneumatiques de bogie permettant de contrôler la hauteur et l'inclinaison d'une caisse d'un véhicule ferroviaire sur un châssis de bogie, sont connues dans le domaine des transports ferroviaires. Habituellement, elles comprennent quatre vannes permettant de contrôler quatre éléments de suspension tels que des coussins de suspension, permettant ainsi de contrôler l'inclinaison de la caisse autour de deux axes perpendiculaires. En variante, il existe aussi des suspensions à trois vannes.

Le document EP 2 483 124 B1 décrit un bogie comportant une suspension pneumatique comprenant quatre ressorts à airs. Il décrit notamment le contrôle de ces ressorts à airs à l'aide de vannes mécaniques pilotées via une tringle liée au bogie. Il décrit aussi l'utilisation de vannes différentielles entre les ressorts à air de deux côtés opposés, afin d'équilibrer en pression ces ressorts.

Toutefois, de telles composants mécaniques sont encombrants, coûteux, et demandent une maintenance importante.

L'un des buts de l'invention est de proposer une suspension pneumatique pour véhicule ferroviaire permettant un nivellement de la caisse avec un nombre de composants mécaniques réduit.

A cet effet, l'invention a pour objet une suspension pneumatique du type précité, comprenant en outre une unité de commande, pour chaque élément de suspension, un capteur connecté à l'unité de commande et apte à mesurer une hauteur entre le châssis et la caisse au niveau dudit élément de suspension, et pour chaque élément de suspension, une électrovanne reliant ledit élément de suspension à la source de pression, ladite électrovanne étant commandée automatiquement par un signal de commande électrique, généré par l'unité de commande en fonction de la ou des hauteurs mesurées.

Avec la suspension pneumatique selon l'invention, l'inclinaison et la hauteur de la caisse sont contrôlées à l'aide d'électrovannes, permettant de réduire le nombre de vannes mécaniques utilisées par rapport à une suspension classique, et permettant ainsi de réduire l'encombrement, le coût, ainsi que la maintenance d'une telle suspension pneumatique.

Suivant certains modes de réalisation, la suspension pneumatique comprend l'une ou plusieurs des caractéristiques suivantes, prises isolément ou selon toute combinaison techniquement envisageable :
- pour chaque élément de suspension, l'électrovanne est commandée automatiquement par le signal de commande électrique associé, pour réguler l'admission et/ou l'échappement d'air au niveau dudit élément de suspension ;
- la suspension pneumatique comprend en outre au moins une paire d'éléments de suspension gauche et droit disposés respectivement sur un côté gauche et un côté droit d'un plan vertical longitudinal médian du châssis, chaque élément de suspension étant de préférence un coussin d'air ;
- pour chaque paire d'éléments de suspension gauche et droit, les signaux de commande électriques des électrovannes gauche et droite correspondantes sont générés en fonction des hauteurs mesurées par les capteurs gauche et droit correspondants, notamment en fonction de la différence entre les hauteurs mesurées par les capteurs gauche et droit ;
- le capteur est un capteur à ultrasons compensé en pression et en température ou un capteur radar ;
- la suspension pneumatique comprend en outre pour chaque élément de suspension, une vanne de sécurité connectée audit élément de suspension et configurée pour évacuer de l'air comprimé dudit élément de suspension lorsque la hauteur mesurée par le capteur correspondant dépasse un seuil de hauteur prédéfini ;
- la suspension pneumatique comprend en outre pour chaque élément de suspension, un réservoir connecté en série entre ledit élément de suspension et l'électrovanne correspondante ; et
- la suspension pneumatique comprend en outre pour chaque élément de suspension, un capteur de pression propre à mesurer la pression d'alimentation dudit élément de suspension.

L'invention a aussi pour objet un véhicule ferroviaire comportant un bogie, une caisse, et une suspension pneumatique, le bogie comprenant un châssis et la suspension pneumatique s'étendant entre le châssis et la caisse, caractérisé en ce que la suspension pneumatique telle que précédemment décrit.

Suivant certains modes de réalisation, le véhicule ferroviaire comprend la caractéristique suivante : chaque capteur de la suspension pneumatique est respectivement apte à mesurer la hauteur entre le châssis et la caisse dudit véhicule ferroviaire, au niveau de l'élément de suspension correspondant.

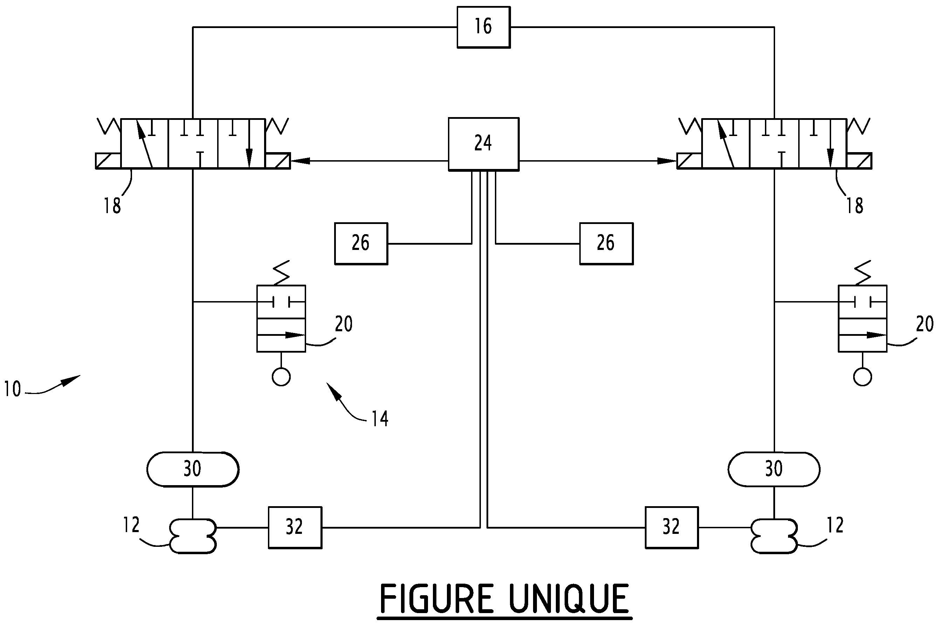

L'invention sera mieux comprise à la lecture de la description qui va suivre, donnée uniquement à titre d'exemple, se référant à la figure unique qui est une représentation schématique d'une suspension pneumatique selon l'invention comportant notamment une paire d'éléments de suspension.

Une suspension pneumatique 10 pour un véhicule ferroviaire est illustrée sur la figure unique.

Cette suspension pneumatique 10 est destinée à équiper un véhicule ferroviaire comportant une caisse et un bogie. La suspension pneumatique 10 est notamment ménagée ente un châssis du bogie et la caisse. Elle comporte de manière classique des éléments de suspension primaires, non représentés, et au moins un élément de suspension 12 pneumatique secondaire. Dans la suite de la description, une suspension pneumatique 10 comprenant plusieurs éléments de suspension 12 pneumatiques secondaires sera décrite.

Les éléments de suspension 12 supportent verticalement la caisse sur le châssis, et sont par exemple des coussins de suspension alimentés par un circuit pneumatique 14 fournissant de l'air comprimé sous une pression d'alimentation vers les éléments de suspension 12. La caisse est élevée par les éléments de suspension au-dessus du châssis à une hauteur dépendant de l'échappement/admission d'air depuis/vers les éléments de suspension 12. En d'autres termes, en activant l'admission d'air dans les éléments de suspension 12, la hauteur de l'élément de suspension, mesurée selon la direction d'élévation du véhicule ferroviaire, augmente, ce qui fait augmenter la hauteur entre le châssis et la caisse.

Dans l'exemple décrit, la suspension pneumatique 10 comprend avantageusement, au moins une paire d'éléments de suspension 12, à savoir un élément de suspension gauche et un élément de suspension droit disposés respectivement sur un côté gauche et un côté droit d'un plan vertical longitudinal médian du châssis, de façon symétrique par rapport à ce plan. De préférence, la suspension pneumatique 10 comprend une paire avant et une paire arrière d'éléments de suspension gauche et droit 12.

Le circuit pneumatique 14 comporte une source de pression 16 permettant de fournir de l'air comprimé aux éléments de suspension 12 et, pour chaque élément de suspension 12, une électrovanne 18 reliant la source de pression 16 à l'élément de suspension 12 correspondant.

L'électrovanne 18 est connue en soi et est une vanne commandée par un signal de commande électrique. Elle est configurée pour réguler l'admission et/ou l'échappement d'air vers/depuis l'élément de suspension 12 correspondant, en fonction du signal de commande électrique. Elle comprend trois positions : une position fermée, dans laquelle la circulation fluidique entre la source 16 et l'élément de suspension 12 et entre l'élément de suspension et l'extérieur est empêchée, une position ouverte en admission dans laquelle l'électrovanne 18 laisse circuler l'air comprimé depuis la source 16 vers l'élément de suspension 12, et une position ouverte en échappement dans laquelle l'électrovanne 18 laisse s'échapper l'air comprimé de l'élément de suspension 12 dans l'atmosphère.

Avantageusement, l'admission et/ou l'échappement d'air au niveau de chaque élément de suspension 12 est réalisée à pression constante et volume variable via la modification de la hauteur de l'élément de suspension 12.

En variante, l'électrovanne 18 est configurée pour réguler la pression dans l'élément de suspension 12 correspondant.

En complément facultatif, le circuit pneumatique 14 comporte en outre pour chaque élément de suspension 12, une vanne de sécurité 20 connectée avantageusement à l'élément de suspension 12 correspondant et de préférence fixée sur le châssis de bogie.

La vanne de sécurité 20 est connue en soi et est une vanne mécanique dite de fin de course. Elle est apte à évacuer de l'air de l'élément de suspension 12 lorsque la hauteur mesurée par le capteur 26 correspondant dépasse un seuil de hauteur prédéfini. Cela peut notamment être dû à un disfonctionnement de l'électrovanne 18 bloquée en position ouverte en admission.

La vanne de sécurité 20 comprend une position fermée, dans laquelle la circulation fluidique entre l'élément de suspension et l'extérieur est interrompue, et une position ouverte dans laquelle la vanne de sécurité 20 laisse s'échapper l'air comprimé de l'élément de suspension 12 dans l'atmosphère. Elle comporte, par exemple, un câble lié au châssis et permettant d'actionner mécaniquement le passage de la vanne de sécurité 20 de la position fermée à la position ouverte, lorsque la caisse est élevée au-delà d'une hauteur prédéfinie au-dessus du châssis par l'élément de suspension 12, ce qui correspond à une hauteur supérieure au seuil de hauteur prédéfini.

La suspension pneumatique 10 comprend en outre une unité de commande 24 connectée électriquement à chaque électrovanne 18 et configurée pour commander automatiquement les électrovannes 18, et pour chaque élément de suspension 12, un capteur 26 connecté électriquement à l'unité de commande 24 et apte à mesurer une hauteur entre le châssis et la caisse au niveau de l'élément de suspension 12 correspondant. La hauteur entre le châssis et la caisse correspond sensiblement à la hauteur de l'élément de suspension 12 à laquelle s'ajoute éventuellement la hauteur des éléments de connexion entre l'élément de suspension et le châssis d'une part et l'élément de suspension 12 et la caisse d'autre part.

L'unité de commande 24 est par exemple, un circuit électronique apte à calculer et générer pour chaque électrovanne 18, un signal de commande électrique en fonction des hauteurs mesurées par les capteurs 26.

Avantageusement, l'unité de commande 24 génère, pour chaque paire d'éléments de suspension 12 gauche et droit, des signaux de commande électriques des électrovannes 18 gauche et droite correspondantes en particulier en fonction des hauteurs mesurées par les capteurs 26 gauche et droit correspondants, et notamment en fonction de la différence entre ces deux hauteurs mesurées.

Le capteur 26 est connu en soi et est par exemple, un capteur de position positionné sur une partie inférieure de la caisse, au niveau de l'élément de suspension 12 correspondant, et étant propre à mesurer une distance prise selon la direction d'élévation entre un point sur une partie supérieure du châssis et la position actuelle du capteur 26.

Le capteur 26 est, par exemple, un capteur à ultrasons compensé en pression et en température ou un capteur radar.

En complément facultatif, la suspension pneumatique 10 comprend en outre, pour chaque élément de suspension 12, un réservoir 30 connecté en série entre l'électrovanne 18 et l'élément de suspension 12 correspondants. Le réservoir 30 est apte à stocker de l'air comprimé afin d'augmenter le volume d'air pouvant être fourni par la source de pression 16 et/ou réduire la rigidité de l'élément de suspension 12.

En complément facultatif, la suspension pneumatique 10 comprend en outre, pour chaque élément de suspension 12, un capteur de pression 32 connecté à l'élément de suspension 12 et apte à mesurer la pression d'alimentation de l'élément de suspension 12 et relié à l'unité de commande 24 pour vérifier le bon fonctionnement de la suspension pneumatique 10.

En fonctionnement normal, l'unité de commande 24 envoi à chaque électrovanne 18 un signal de commande électrique respectif. Ce signal de commande électrique est calculé en fonction des hauteurs mesurées par les capteurs 26.

En fonction du signal de commande électrique reçu, l'électrovanne 18 change ou non de position, afin de réguler l'admission d'air dans l'élément de suspension 12 c'est-à-dire l'alimentation de l'élément de suspension 12. Cette régulation équivaut à une régulation de la hauteur d'élévation de la caisse au-dessus du châssis.

La commande automatique de l'électrovanne 18 par l'unité de commande 24 permet d'avoir un asservissement de la hauteur entre la caisse et le châssis au niveau de chaque élément de suspension 12, qui est notamment actualisé par la hauteur mesurée par le capteur 26. Cela permet de se passer de l'utilisation de vannes mécaniques asservies à l'aide d'une tringle, notamment plus encombrantes, qui sont utilisées dans des suspensions classiques.

En outre, pour une paire d'éléments de suspension 12 gauche et droite, l'unité de commande 24 génère des signaux de commande en fonction à la fois de la hauteur mesurée par le capteur 26 gauche correspondant et de la hauteur mesurée par le capteur 26 droit correspondant. L'unité de commande 24 génère ces signaux en fonction notamment de la différence de hauteur entre les deux capteurs 26, qui correspond à la différence entre les hauteurs mesurées par les deux capteurs 26. Cela permet d'avoir un équilibrage entre ces deux éléments de suspension 12 gauche et droit afin de contrôler l'inclinaison de la caisse, permettant ainsi de se passer de l'utilisation d'une vanne différentielle.

L'utilisation de vannes de sécurité 20 permet d'éviter que la hauteur et/ou la pression d'alimentation soit trop importante, et donc un endommagement des éléments de suspension 12.

## Revendications

1. Suspension pneumatique (10) pour véhicule ferroviaire comprenant une caisse et un bogie, ladite suspension pneumatique s'étendant entre la caisse et un châssis du bogie, comprenant :
- au moins un élément de suspension (12) pneumatique secondaire destiné à supporter verticalement la caisse sur le châssis et propre à être alimenté en air comprimé à une pression d'alimentation, et
- une source de pression (16),
**caractérisé en ce qu'**elle comprend en outre :
- une unité de commande (24),
- pour chaque élément de suspension (12), un capteur (26) connecté à l'unité de commande (24) et apte à mesurer une hauteur entre le châssis et la caisse au niveau dudit élément de suspension (12),
- pour chaque élément de suspension (12), une électrovanne (18) reliant ledit élément de suspension (12) à la source de pression (16), ladite électrovanne (18) étant commandée automatiquement par un signal de commande électrique, généré par l'unité de commande (24) en fonction de la ou des hauteurs mesurées, et
- pour chaque élément de suspension (12), une vanne de sécurité (20) connectée audit élément de suspension (12) et configurée pour évacuer de l'air comprimé dudit élément de suspension (12) lorsque la hauteur mesurée par le capteur correspondant dépasse un seuil de hauteur prédéfini.

2. Suspension pneumatique (10) selon la revendication 1, dans laquelle pour chaque élément de suspension (12), l'électrovanne (18) est commandée automatiquement par le signal de commande électrique associé, pour réguler l'admission et/ou l'échappement d'air au niveau dudit élément de suspension (12).

3. Suspension pneumatique (10) selon la revendication 1 ou 2, comprennent au moins une paire d'éléments de suspension (12) gauche et droit disposés respectivement sur un côté gauche et un côté droit d'un plan vertical longitudinal médian du châssis, chaque élément de suspension (12) étant de préférence un coussin d'air.

4. Suspension pneumatique (10) selon la revendication 3, dans laquelle, pour chaque paire d'éléments de suspension (12) gauche et droit, les signaux de commande électriques des électrovannes (18) gauche et droite correspondantes sont générés en fonction des hauteurs mesurées par les capteurs (26) gauche et droit correspondants, notamment en fonction de la différence entre les hauteurs mesurées par les capteurs (26) gauche et droit.

5. Suspension pneumatique (10) selon l'une quelconque des revendications précédentes, dans lequel le capteur (26) est un capteur à ultrasons compensé en pression et en température ou un capteur radar.

6. Suspension pneumatique (10) selon l'une quelconque des revendications précédentes, comprenant en outre pour chaque élément de suspension (12), un réservoir (30) connecté en série entre ledit élément de suspension (12) et l'électrovanne (18) correspondante.

7. Suspension pneumatique (10) selon l'une quelconque des revendications précédentes, comprenant en outre pour chaque élément de suspension (12), un capteur de pression (32) propre à mesurer la pression d'alimentation dudit élément de suspension (12).

8. Véhicule ferroviaire comportant un bogie, une caisse, et une suspension pneumatique (10), le bogie comprenant un châssis et la suspension pneumatique s'étendant entre le châssis et la caisse,
**caractérisé en ce que** la suspension pneumatique (10) est selon l'une quelconque des revendications précédentes.

9. Véhicule ferroviaire selon la revendication 8, dans lequel chaque capteur (26) de la suspension pneumatique (10) est respectivement apte à mesurer la hauteur entre le châssis et la caisse dudit véhicule ferroviaire, au niveau de l'élément de suspension (12) correspondant.
